# EUROPEAN PATENT SPECIFICATION

(11) **EP 1 002 588 B1**
(45) Date of publication and mention of the grant of the patent: **02.01.2004**
(21) Application number: 00103595.5
(22) Date of filing: 12.02.1997
(51) Int. Cl.: B07B 1/46, B01D 33/03

(54) **Panel for a screen**
Siebplatte
Panneau de tamis

(30) Priority: 12.02.1996 US 598566; 21.01.1997 US 786515
(43) Date of publication of application: 24.05.2000
(62) Divisional of application: 97903439.4
(73) Proprietor: Varco I/P, Inc., Houston, TX 77042 (US)
(72) Inventor: Adams, Thomas Cole, Hockley, Texas 77447 (US); Schulte, David Lee Jr., Broussard,LA 70518 (US); Grichar, Charles Newton, Houston, Texas 77069 (US); Leone, Vincent Dominick Sr., Houston, Texas 77069 (US); Walker, Jeffrey Earl, Lafayette,LA 70501 (US); Seyffert, Kenneth Wayne, Houston, Texas 77009 (US); McClung, Guy Lamont III, Spring, Texas 77379-4578 (US)
(74) Representative: Lucas, Brian Ronald

(56) References cited:
- WO-A-94/15724
- WO-A-94/23849

## Description

This invention relates to a panel for a screen.

Vibrating screens have been employed for many years to separate particles in a wide array of industrial applications. One common application of vibrating screens is in drilling operations to separate particles suspended in drilling fluids. The screens are generally flat and are mounted generally horizontally on a vibrating mechanism or shaker that imparts either a rapidly reciprocating linear, elliptical or circular motion to the screen. Material from which particles are to be separated is poured onto a back end of the screen, usually from a pan mounted above the screen. The material generally flows toward the front end of the screen. Large particles unable to move through the screen remain on top of the screen and move toward the front of the screen where they are collected. The smaller particles and fluid flow through the screen and collect in a pan beneath the screen.

A vibrating screen may be formed from one or more layers of wire mesh. Wire mesh is generally described with reference to the diameter of the wires from which it is woven, the number wires per unit length (called mesh count), and the shape or size of the openings between wires. Wire mesh comes in various grades. "Market" grade mesh generally has wires of relatively large diameter. "Mill" grade has comparatively smaller diameter wires and "bolting cloth" has the smallest diameter wire. The type of mesh chosen depends on the application. Smaller diameter wires have less surface and thus less drag, resulting in greater flow rates. Smaller diameter wires also result, for a given opening size, in a larger percentage of open area over the total area of the screen, thus allowing greater flow rates and increased capacity. However, screens of bolting cloth tear more easily than market or mill grade screens, especially when used in harsh conditions such as drilling and mining operations. The smaller diameter wires tend to have less tensile strength and break more easily, and the finer mesh also tends not to retain its shape well.

It is known to support screening mesh with a sheet of perforate material. For example, WO-A-94/23849 discloses a flat screen for separating solids from drilling fluid comprising a sheet of perforate material which underlies and supports one or more layers of mesh. The sheet of perforate material comprises transverse ribs which define a series of triangular openings. It will be noted that the triangular openings are arranged in groups with the apices of the triangular openings in each group facing one another, each opposite pair of openings separated by the same distance as any other opposite pair.

One problem with such an arrangement is that a relatively large surface area is taken up by the support sheet, thereby reducing the throughput of the screen. Another problem is that the support sheet is structurally weak at certain points which reduces the longevity of the screen.

The present invention aims to address one or more such problems.

According to the present invention there is provided a panel for a screen, said panel comprising a plurality of groups of perforations, each group comprising six generally equally triangular apertures arranged with their apices facing a central portion, wherein the apices of two opposing ones of said triangular apertures are spaced apart further than the apices of opposed ones of the remaining triangular apertures.

Further features are set out in Claims 2 to 4.

For a better understanding of the present invention reference will now be made, by way of example, to the accompanying drawings, in which:-
Fig. 1 is a plan view of part of a panel for a screen;
Fig. 2 is a plan view of part of a panel for a screen in accordance with the present invention;
Fig. 3 is a perspective view of a screen;
Fig. 4 shows, to an enlarged scale, a detail of part of the screen shown in Figure 3; and
Figs. 5 to 9 show end views of five different embodiments of corrugated panels mounted on supports.

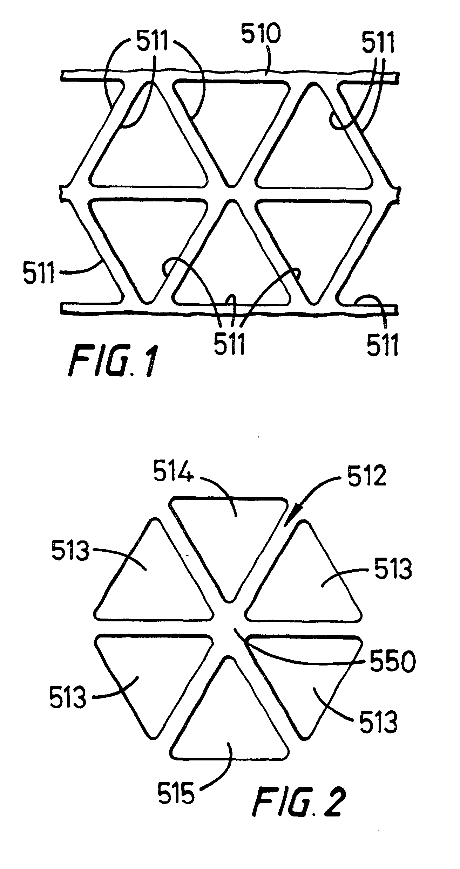

Referring to Fig. 1 there is shown a pattern of triangular openings in a perforated panel 510 (made of metal or metal-like material). The openings 511 are positioned side-by-side in an array that extends across substantially all of a panel. The panel may be corrugated or flat or a combination thereof with alternating flat and corrugated portions.

Fig. 2 shows the pattern of the triangular openings for the perforated plate 512. It will be noted that the openings 514 and 515 are spaced apart from each other slightly more than the middle openings of the plate 510 producing, in certain embodiments, stronger central portions 550. The panel may be corrugated or flat or a combination thereof with alternating flat and corrugated portions.

In the pattern of openings in Fig. 2, the pattern is shifted slightly as compared to that of the panel 510 to optimize use of a screening surface. For example, a screen using the pattern of Fig. 1 and a web width (distance between two adjacent openings) of 3.17mm (0.125"), has a border on each edge. By shifting the triangular openings to that of Fig. 2, a web width of 3.17mm (0.125") may be maintained while decreasing the border. This allows more openings in the screen of Fig. 2 as compared to that of Fig. 1, thus increasing surface area and improving appearance.

In the pattern of Fig. 1, the openings are arranged in rows with bases and peaks alternating. The peak of one opening is level with the base of the next. In the pattern of Fig. 2 the openings 513 are moved closer together and the peaks of the openings 513 are not level with the base of the opening 514 or 515.

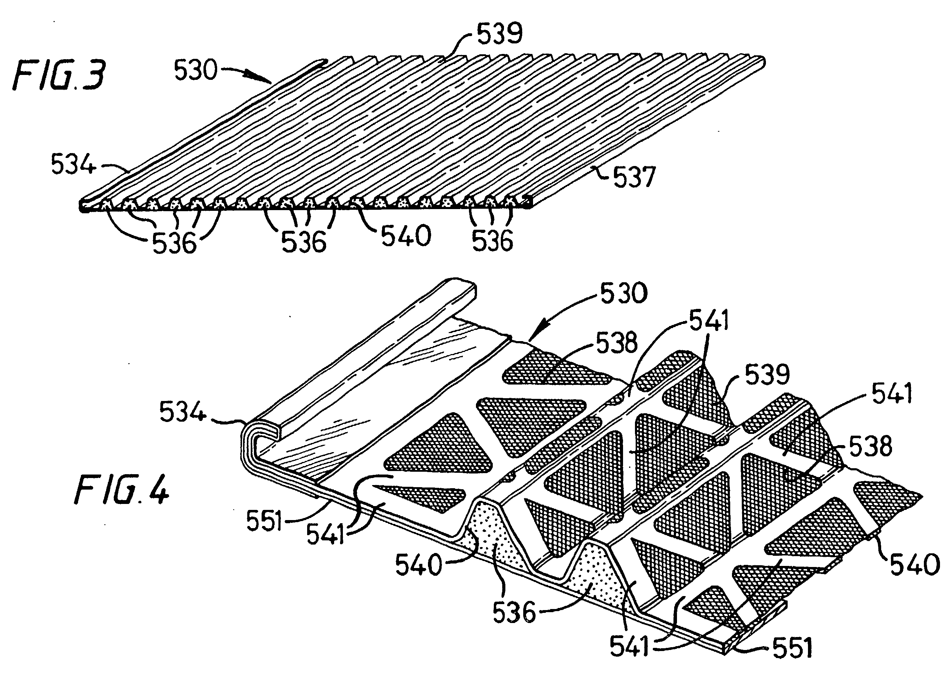

Figs. 3 and 4 show a screen 530 with a corrugated support panel 540 (preferably made of metal) having a plurality of triangular openings 538 (not shown in Fig. 3; see Fig. 4) thereacross the surface of and therethrough; optional upturned edges 534 and 537 for anchoring the screen 530 to a vibratory shaker; wire mesh or meshes 539 secured to the panel 540; and plugs 536 at both ends to plug ridge openings 532 at each end of the corrugations of the plate 540. The plate 540 rests on and is secured to a strip or strips 551 (alternatively a frame or multiple strips criss-crossing the plate 540 or a series all in the same direction, or a perforated plate may be used). In one aspect the strip(s) 551 are omitted. The strips 551 may be made of any suitable material, including, but not limited to, metal, plastic, fiberglass, rubber, or cermet.

A screen according to the present invention may be made without a plastic grid located between a lower panel and a screen(s) or mesh(es) above the plastic grid. When screening material is bonded to a corrugated perforated panel (e.g as in Fig. 4), thermal expansion puts the screening material in tension. Such a result is not produced when a plastic grid process is used. A metal corrugated perforated panel withstands tension induced thereon by screening material applied and/or bonded thereto. In one aspect the panel is first covered with adhesive (e.g. powdered epoxy) then the mesh(es) and/or screen(s) are placed on the panel. Upon curing of the epoxy, adhesive 541 covers or envelops part of the mesh/screen at the solid areas of the panel.

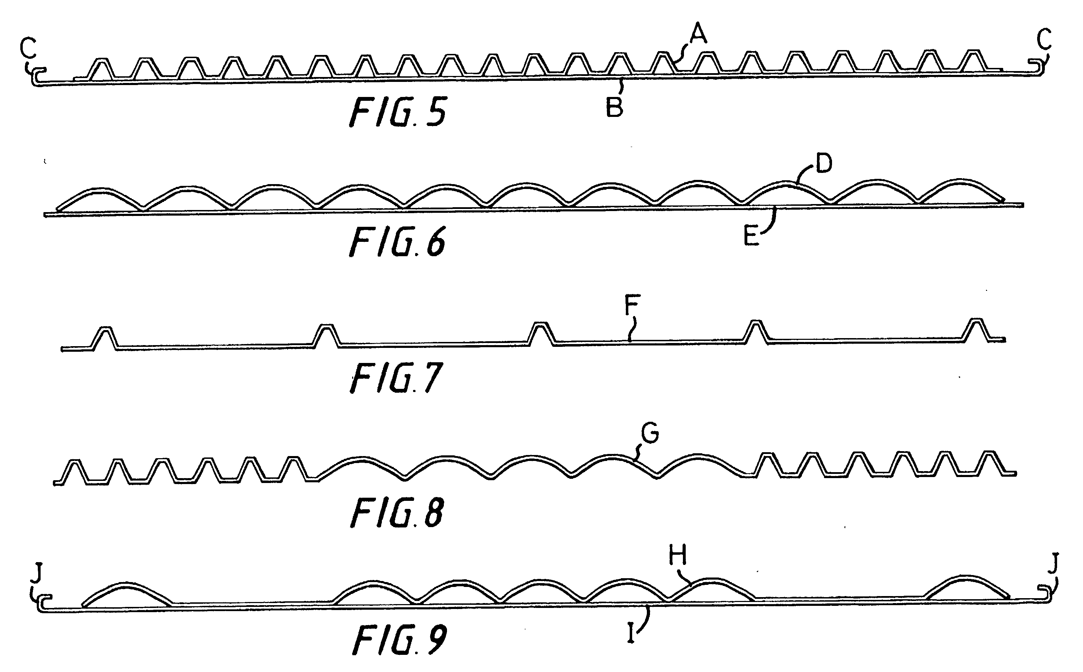

Figs. 5-9 present a variety of configurations for corrugated perforated panels according to the present invention.

Fig. 5 shows a corrugated panel A on a support strip B having optional mounting hooks C.

Fig. 6 shows a corrugated panel D on a support strip E. Optionally, mounting hooks may be used with such an assembly.

Fig. 7 shows a support strip F. A corrugated perforated panel may have such a configuration and mounting hooks may be used with the strips or with the plate.

Fig. 8 shows a support strip G. A corrugated perforated panel may have such a configuration and mounting hooks may be used with the strips or with the plate.

Fig. 9 shows a corrugated perforated panel H on a support strip I having optional mounting hooks J.

## Claims

1. A panel for a screen, said panel comprising a plurality of groups of perforations, each group comprising six generally equal triangular apertures (513, 514, 515) arranged with their apices facing a central portion (550) , wherein the apices of two (514, 515) opposing ones of said triangular apertures are spaced apart further than the apices of opposed ones of the remaining triangular apertures (513, 513; 513, 513).

2. A panel as claimed in Claim 1, wherein the bases of said two (514, 515) opposing ones of said triangular apertures are parallel to the sides of said panel.

3. A panel as claimed in Claim 1 or 2, including an edge member for facilitating mounting said panel to a vibratory shaker.

4. A panel as claimed in Claim 1, 2 or 3, wherein said panel is provided with at least one layer of mesh which is secured thereto.

## Patentansprüche

1. Platte für ein Sieb, die mehrere Gruppen von Lochungen umfasst, wobei jede Gruppe sechs im Allgemeinen gleiche dreieckige Öffnungen (513, 514, 515) umfasst, die so angeordnet sind, dass ihre Spitzen einem zentralen Abschnitt (550) zugewandt sind, wobei die Spitzen von zwei (514, 515) gegenüberliegenden der dreieckigen Öffnungen weiter als die Spitzen von gegenüberliegenden der verbleibenden dreieckigen Öffnungen (513, 513; 513, 513) beabstandet sind.

2. Platte nach Anspruch 1, bei der die Basen von diesen zwei (514, 515) gegenüberliegenden der dreieckigen Öffnungen zu den Seiten der Platte parallel sind.

3. Platte nach Anspruch 1 oder 2, die ein Kantenelement aufweist, um die Anbringung der Platte an einem Vibrationsschüttler zu erleichtern.

4. Platte nach Anspruch 1, 2 oder 3, wobei die Platte mit wenigstens einer daran befestigten Maschenlage versehen ist.

## Revendications

1. Panneau pour écran, ledit panneau comprenant une pluralité de groupes de perforations, chaque groupe comprenant six ouvertures triangulaires égales (513, 514, 515) disposées avec leurs sommets faisant face à une partie centrale (550), dans laquelle les sommets de deux ouvertures opposées (514, 515) desdites ouvertures triangulaires sont espacées plus loin que les sommets des ouvertures opposées des ouvertures triangulaires restantes (512, 513; 513, 313).

2. Panneau selon la revendication 1, dans lequel les bases desdites deux ouvertures opposées desdites ouvertures triangulaires sont parallèles aux côtés dudit panneau.

3. Panneau selon la revendication 1 ou 2, comprenant un élément de bord pour faciliter le montage dudit panneau à un secoueur vibrant.

4. Panneau selon la revendication 1, 2 ou 3, dans lequel ledit panneau est équipé d'au moins une couche de maille qui y est fixée.
